# EUROPÄISCHE PATENTANMELDUNG

(11) **EP 0 849 908 A2**
(43) Veröffentlichungstag der Anmeldung: **24.06.1998**
(21) Anmeldenummer: 97440139.0
(22) Anmeldetag: 19.12.1997
(51) Int. Cl.: H04L 1/24

(54) **Verfahren zur In-Betrieb-Überwachung eines Digitalübertragungssystems**

(30) Priorität: 20.12.1996 DE 19653260
(71) Anmelder: ALCATEL ALSTHOM COMPAGNIE GENERALE D'ELECTRICITE, 75008 Paris (FR)
(72) Erfinder: Mohr, Werner, 71384 Weinstadt (DE); Halbach, Willi, 74321 Bietigheim-Bissingen (DE)
(74) Vertreter: Schätzle, Albin, Dipl.-Phys.

(57) **Zusammenfassung**

Ein Digitalübertragungssystem (SYS) beinhaltet beispielsweise zwei Leitungsendgeräte (LE1, LE2), die über eine Serienschaltung aus wenigstens zwei Zwischenregeneratoren (ZWR1, ZWRn) miteinander verbunden sind. Zu übertragende Digitalsignale werden in einer vorgegebenen Rahmenstruktur bidirektional von Leitungsendgerät (LE1, LE2 ) zu Leitungsendgerät (LE1, LE2) übertragen werden. Jeder Rahmen enthält an einer vorgegebenen Stelle quasi-statische Informationen (11, 12), z.B. Alarmmeldungen. Vomersten Leitungsendgerät (LE1) zum zweiten Leitungsendgerät ( LE2 ) oder umgekehrt zu übertragende Überwachungssignale (U1) werden im Zeitmultiplexverfahren mit den quasi-statischen Informationen (l1) an der gleichen Stelle im Rahmen übertragen. So werden z.B. im ersten Leitungsendgerät (LE1) die quasistatschen Informationen (12) jeden zweiten Rahmens durch Überwachungssignale ersetzt und im zweiten Leitungsendgerät ( LE2 ) die Überwachungssignale durch die quasi-statischen Informationen des zeitlich vorangehenden Rahmens ersetzt.

## Beschreibung

Die Erfindung betrifft ein Verfahren zur In-Betrieb-Überwachung eines Digitalübertragungssystems.

Digitalübertragungssystem beinhalten beispielsweise zwei Leitungsendgeräte, die über einen Zwischenregenerator oder eine Serienschaltung aus wenigstens zwei Zwischenregeneratoren miteinander verbunden sind. Zu übertragende Digitalsignale werden in einer vorgegebenen Rahmenstruktur bidirektional von Leitungsendgerät zu Leitungsendgerät übertragen werden.

Aus der Zeitschrift "telecom report", 7(1984), Heft 6, Seiten 393 bis 397 ist eine In-Betrieb-Überwachung von Digitalübertragungssystemen bekannt. Die Überwachung erfolgt mittels adressenloser Telegramme, für die ein eigener Telemetriekanal bei einer niederfrequenten Trägerfrequenz zur Verfügung gestellt wird. Die Trägerfrequenz ist beispielsweise 153,6 kHz bei einer Digitalsignalübertragung von 140 Mbit/s und 614,4 kHz bei einer Digitalsignalübertragung von 565 Mbit/s. Durch die Überlagerung der Digitalsignale mit den Telegrammen, deren Inhalt starken Schwankungen unterliegt, kann die Digitalsignalübertragung beeinträchtigt werden. Außerdem sind in jedem Zwischenregenerator zwei Telemetriesignalregeneratoren erforderlich, die die Telegramme aus den empfangenen Signalen herausfiltern, sie verstärken und den zu übertragenden Digitalsignalen wieder hinzufügen.

Es ist deshalb eine Aufgabe der Erfindung, ein alternatives Verfahren zur In-Betrieb-Überwachung eines Digitalübertragungssystems zur Verfügung zu stellen, bei dem insbesondere der schaltungstechnische Aufwand in den Zwischen regeneratoren optimiert ist.

Diese Aufgabe wird durch die Lehre des Patentanspruchs 1 gelöst. Vorteilhafte Ausgestaltungen sind den abhängigen Patentansprüchen 2 bis 6 zu entnehmen.

Ein besonderer Vorteil der Erfindung ist, daß das Überwachungsverfahren kompatibel zu allen Standard rahmen und -kodes ist. Damit verbunden ist eine kostengünstigere Überwachung und Fehlerortung, da beispielsweise handelsübliche Meßgeräte anstelle von Spezialanfertigungen verwendet werden können.

Ein weiterer Vorteil der Erfindung ist die Verminderung der Störanfälligkeit der Digitalsignalübertragung durch die Übertragung der Überwachungssignale im Zeitmultiplex mit den Digitalsignalen anstelle der gleichzeitigen Übertragung bei unterschiedlichen Frequenzen.

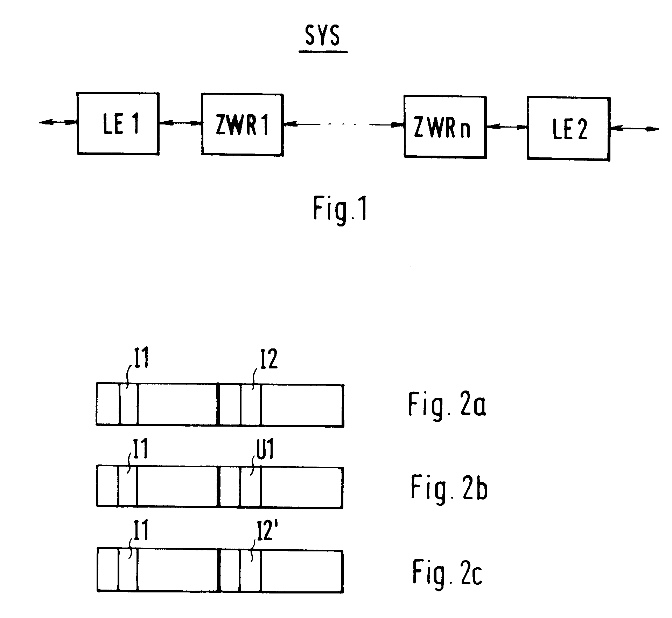

Im folgenden wird die Erfindung anhand eines Ausführungsbeispiels unter Zuhilfenahme der Figuren 1 und 2 erläutert. Es zeigen :
- Fig. 1: eine schematische Darstellung eines erfindungsgemäßen Digitalübertragungssystems und
- Fig. 2: sechs schematische Diagramme mit jeweils zwei Rahmen für einzelne Streckenabschnitte des Digitalübertragungssystems aus Fig. 1.

Das Ausführungsbeispiel wird im folgenden zunächst unter Zuhilfenahme der Fig. 1 erläutert. Fig. 1 zeigt ein erfindungsgemäßes Digitalübertragungssystem SYS. Das Digitalübertragungssystem SYS beinhaltet zwei Leitungsendgeräte LE1, LE2, die über eine Serienschaltung aus wenigstens zwei Zwischenregeneratoren ZWR1 bis ZWRn miteinander verbunden sind, n ist eine natürliche Zahl, beipielsweise 4 oder 10. Zu übertragende Digitalsignale werden in einer vorgegebenen Rahmenstruktur bidirektional von Leitungsendgerät LE1, LE2 zu Leitungsendgerät LE2, LE1 übertragen. Das Digitalübertragungssystem ist beispielsweise ein PCM-Übertragungssystem; PCM = Pulse Code Modulation. Die zu übertragenden Digitalsignale werden beispielsweise im Leitungsendgerät LE1 aus einem zweiten, nicht dargestellten Übertragungssystem, beispielsweise ein SDH-System empfangen; SDH = Synchrone Digitale Hierarchie. Im Leitungsendgerät werden die empfangenen Digitalsignale in das PCM-Leitungskode umgesetzt und anschließend über die Zwischenregeneratoren ZWR1 bis ZWRn zum Leitungsendgerät LE2 übertragen. Vom Leitungsendgerät LE2 aus können die vom Leitungsendgerät empfangenen Digitalsignale in ein drittes, nicht dargestelltes Übertragungssystem, beispielsweise ebenfalls ein SDH-System übertragen werden. Die Übertragung vom dritten Übertragungssystem ins erste erfolgt auf vergleichbare Art und Weise. Zusätzlich zu den Digitalsignalen werden Überwachungssignale in Form von Telegrammen übertragen.

Jeder Rahmen beinhaltet einen Kopfteil und einen Nutzinformationsteil. Im Kopfteil werden beispielsweise ein Rahmenkennwort, Steuerinformationen und quasi-statische Informationen übertragen. Die quasi-statischen Informationen sind beispielsweise Alarmmeldungen. Für die Übertragung der Alarmmeldungen sind bestimmte Bits pro Rahmen vorgesehen. Im Normalfall, in dem keine Störung auftritt, sind alle Bits beispielsweise auf den logischen Wert Eins gesetzt. Die Alarmmeldungen sollen beispielsweise das dritte Übertragungssystem darüber informieren, ob im ersten Übertragungssystem ein Fehler aufgetreten ist. Solange im ersten Übertragungssysten kein Fehler auftritt, bleibt der Wert der Alarmmeldungen unverändert gleich Eins, ist also statisch. Nur für den Fall, daß ein Fehler auftritt, werden, abhängig vom Fehlertyp beispielsweise alle Bits auf den logischen Wert Null gesetzt. Solange der Fehler vorliegt, bleibt der Wert der Alarm meldungen unverändert gleich Null, ist also ebenfalls statisch. Insgesamt liegt also eine quasi-statische Information vor, die vom ersten ins dritte Übertragungssystem oder umgekehrt transportiert werden soll ohne einen Einfluß auf die Übertragung zwischen den beiden Leitungsendgeräten LE1 und LE2 zu haben. Aus diesem Grund können die quasi-statischen Informationen teilweise auf der Übertragungsstrecke zwischen den beiden Leitungsendgeräten LE1 und LE2 eliminiert werden ohne daß Information für das Übertragungssystem SYS verloren geht. Es ist jedoch darauf zu achten, daß wenigstens ein Teil der quasi-statischen Informationen zum ersten bzw. dritten Übertragungssystem weitergeleitet wird, damit das entsprechende Übertragunssystem, wenn auch zeitverzögert und/oder mit einer geringeren Datenrate die Alarmmeldungen erhält.

Die In-Betrieb-Überwachung des Digitalübertragungssystems SYS erfolgt nun durch Überwachungssignale, die im Zeitmultiplexverfahren mit den quasi-statischen Informationen übertragen werden. Die Überwachungssignale werden auf der Übertragungsstrecke zwischen den beiden Leitungsendgeräten LE1 und LE2 benötigt. Sie werden am Leitungsendgerät LE1 oder LE2 in den Rahmen eingefügt und am Leitungsendgerät LE2 bzw. LE1 wieder aus dem Rahmen entfernt und ausgewertet. Die Digitalsignale, die ins erste oder ins dritte Übertragungssystem übertragen werden beinhalten keine Überwachungssignale mehr.

Die quasi-statische Informationen werden in jedem Rahmen an einer vorgegebenen Stelle übertragen, so daß die Überwachungssignale bei der Übertragung im Zeitmultiplexverfahren mit den quasi-statischen Informationen an der gleichen Stelle im Rahmen übertragen werden.

Beispielsweise werden in beiden Leitungsendgeräten LE1 und LE2 in jedem zweiten zu übertragenden Rahmen, die im Rahmen enthaltenen quasi-statischen Informationen durch Überwachungssignale ersetzt. So werden der erste Rahmen unverändert übertragen und im zweiten Rahmen, die Bits, in denen quasi-statische Informationen vorliegen durch Bits, die Überwachungsinformationen enthalten ersetzt. Ebenso werden in beiden Leitungsendgeräten LE1 und LE2 in jedem zweiten empfangenen Rahmen, die im Rahmen enthaltenen Überwachungssignale durch die quasi-statischen Informationen des vorangehenden Rahmens ersetzt, damit wieder ein Standard rahmen entsteht. Die quasi-statischen Informationen sind zuvor in einem Zwischenspeicher abgespeichert und werden beim Ersetzungsvorgang ausgelesen. Wie oben gezeigt, ist der Wert der quasi-statischen Informationen sowohl im fehlerfreien als auch im fehlerbehafteten Fall statisch, so daß die maximale Verzögerung, die durch die zusätzliche Übertragung der Überwachungssignale auftritt eine Rahmenlänge beträgt, was akzeptabel ist, im Vergleich zum Gewinn, nämlich der Möglichkeit der zusätzlichen Übertragung von Überwachungssignalen.

In jedem Zwischenregenerator ZWR1 bis ZWRn werden die empfangenen Überwachungssignale ausgewertet. In Rückwärtsrichutung werden daraufhin z.B. Daten über die Übertragungsgüte des vorangehenden Streckenabschnitts und über den aktuellen Betriebszustand des jeweiligen Zwischenregenerators ZWR1 bis ZWRn gesendet. Die Uberwachungsignale, die vom Leitungsendgerät LE2 ausgesendet werden enthalten beispielsweise die Information, daß das Leitungsendgerät LE2 fehlerfrei arbeitet. Die Überwachungsignale, die vom Zwischenregenerator ZWR1 ausgesendet werden enthalten beispiesweise die Information, daß die Übertragung auf dem Streckenabschnitt zwischen Leitungsendgerät LE1 und Zwischenregenerator ZWR1 fehlerfrei ist, und daß der Zwischenregenerator ZWR1 fehlerfrei arbeitet. Die Überwachungsignale, die vom Zwischenregenerator ZWRn ausgesendet werden enthalten beispiesweise die Information, daß die Übertragung auf dem Streckenabschnitt zwischen Zwischenregenerator ZWRn-1 und der Zwischenregenerator ZWRn fehlerfrei ist, und daß der Zwischenregenerator ZWRn fehlerfrei arbeitet, so daß das Leitungsendgerät LE21 bei fehlerfreiem Empfang der vom Zwischenregenerator ZWRn ausgesendeten Signale darüber informiert ist, daß die Übertragung zwischen Leitungsendgerät LE1 und Zwischenregenerator ZWRn fehlerfrei ist.

Die Zwischenregeneratoren ZWR1 bis ZWRn werden beispielsweise vom Leitungsendgerät LE1 gespeist. Für den Fall eines Kabelbruchs überträgt der Zwischenregenerator, der direkt vor dem in Speiserichtung gelegenen Kabelbruch liegt, in Gegenrichtung zur Speiserichtung durch Schalten einer Gleichstrom- und einer Signalschleife Überwachungssignale mit einer entsprechenden Alarmmeldung zum speisenden Leitungsendgerät. Beispielsweise ist ein Kabelbruch auf dem Streckenabschnitt zwischen Zwischenregenerator ZWR1 und Zwischenregenerator ZWR2 aufgetreten. Zwischenregenerator ZWR1 registriert den Kabelbruch. Im Zwischenregenerator ZWR1 wird sodann eine Fernspeise- und eine Signalschleife geschaltet, indem die Übertragungsleitung zum Zwischenregenerator ZWR2 mit der Übertragungsleitung zum Leitungsendgerät LE1 geschleift wird. Die im Leitungsendgerät LE1 empfangenen Überwachungssignale enthalten eine Alarmmeldung, die beispielsweise die Adresse des Zwischenregenerator ZWR1 enthält, und im Zeitmultiplexverfahren mit den Digitalsignalen zum Leitungsendgerät LE1 gesendet wird. Im Leitungsendgerät LE1 wird die empfangene Alarmmeldung ausgewertet. Eine Alarmmeldung vom Zwischenregenerator ZWR1 bedeutet, daß auf dem Streckenabschnitt zwischen Zwischenregenerator ZWR1 und Zwischenregenerator ZWR2 ein Kabelbruch vorliegt. Eine vom Zwischenregenerator ZWRn-1 empfangene Alarmmeldung bedeutet, daß auf dem Streckenabschnitt zwischen Zwischenregenerator ZWRn-1 und Zwischenregenerator ZWRn ein Kabelbruch vorliegt. Damit ist der Kabelbruch lokalisiert und geortet.

Während der Initialisierungsphase wird jedem Zwischenregenerator ZWR1 bis ZWRn und dem Leitungsendgerät LE2 vom Leitungsendgerät LE1 eine Adresse zugewiesen. Die Zuweisung erfolgt zeitlich versetzt. Zunächst wird beispielsweise der Streckenabschnitt zwischen dem Leitungsendgerät LE1 und Zwischenregenerator ZWR1 eingemessen und dem Zwischenregenerator ZWR1 z.B. die Adresse mit der Bitfolge 001 zugewiesen. Die Anzahl der Bits der Bitfolge ist abhängig von der Anzahl der Zwischenregeneratoren, z.B. können mit drei Bits acht veschiedene Adressen für acht Zwischenregeneratoren generiert werden. Anschließend wird der Streckenabschnitt zwischen dem Leitungsendgerät LE1 und dem Zwischenregenerator ZWR2 eingemessen und dem Zwischenregenerator ZWR2 z.B. die Adresse mit der Bitfolge 010 zugewiesen. Dies hat den Vorteil, daß den Zwischenregeneratoren ZWR1 bis ZWRn Adressen mit möglichst kurzen Bitfolgen zugewiesen werden können, die bei der Übertragung der Überwachungssignale Ubertragungskapazität einsparen. Den Daten der zu übertragenden Übertragungssignale wird die Adresse des jeweiligen Zwischenregenerators ZWR1, ZWRn hinzugefügt.

Mittels der Adresssen können die Zwischenregeneratoren ZWR1, ZWRn mindestens von einem der zwei Leitungsendgeräte LE1, LE2 aus zeitkontinuierlich im Pollingverfahren abgefragt werden. Dies hat den Vorteil, daß bei einer Störung, z.B. Ausfall der Verbindung, aktuelle Werte von allen Zwischenregeneratoren ZWR1 bis ZWRn vorliegen. Des weiteren können Ausfälle schon im Vorfeld, also vor dem eigentlichen Unterbrechen der Verbindung erkannt werden, da beispielsweise die Übertragungsleistung eines Zwischenregenerators ZWR1, ZWRn aufgrund des Eindringens von Feuchte in der Regel abfällt. Auf diese Weise kann einem Ausfall einer Verbindung vorgebeugt werden, indem zu einem geeigneten Zeitpunkt ein Monteur zum entsprechenden Zwischenregenerator ZWR1, ZWRn gesandt wird, mit dem Auftrag die entsprechend in ihrer Leistung reduzierte Baugruppe auszutauschen oder das Kabel zu prüfen.

Das Ausführungsbeispiel wird im folgenden weiter unter Zuhilfenahme der Fig. 2 erläutert. Fig. 2 zeigt sechs schematische Diagramme mit jeweils zwei Rahmen für einzelne Streckenabschnitte des Digitalübertragungssystems aus Fig. 1.

Fig. 2a zeigt zwei Rahmen, die vom Leitungsendgerät LE1 z.B. aus dem ersten Übertragungssystem empfangen werden. Jeder Rahmen enthält an einer vorgegeben Stelle im Rahmen quasi-statische Informationen. Im ersten Rahmen sind beispielsweise die quasi-statischen Informationen I1 und im zweiten Rahmen die quasi-statischen Informationen I2 enthalten.

Fig. 2b zeigt die zwei Rahmen aus Fig. 2a nach Durchlaufen des Leitungsendgeräts LE1. Im Leitungsendgerät LE1 sind aus dem zweiten Rahmen die quasi-statischen Informationen 12 entfernt worden. Dies erfolgt nach der Synchronisation auf das Rahmenkennwort und einem Demultiplexierungsvorgang. Die Bits die durch die quasi-statischen Informationen 12 belegt waren, stehen nun zur Übertragung von andere Informationen zur Verfügung. Sie werden beispielsweise durch Überwachungssignale U1 ersetzt. Im Leitungsendgerät LE2 werden dann die Überwachungssignale eleminiert und durch Kompensationssignale 12' ersetzt, siehe Fig. 2c. Die Kompensationssignale 12' gehen aus den quasi-statischen Informationen 11 des vorangehenden Rahmens hervor, die kopiert und zwischengespeichert wurden und sind im einfachsten Fall mit ihnen identisch.

Im Ausführungsbeispiel ist ein Übertragungssystem SYS mit zwei Leitungsendgeräten LE1 und LE2 und mehreren Zwischenregenerator ZWR1 bis ZWRn beschrieben. Das Übertragungssystem SYS kann auch nur einen Zwischen regenerator beinhalten. Zwischen zwei Zwischenregeneratoren können auch eine Serienschaltung aus zwei weiteren Leitungsendgeräten, z.B. zwecks Zwischenspeisung, oder eine Serienschaltung aus einem Leitungsendgerät, einem sog. Crossconnect und einem weiteren Leitungsendgerät angeordnet sein. Die Übertragung von Überwachungsignalen von Leitungsendgerät LE1 zu Leitungsendgerät LE2 bleibt davon unbeeinflußt.

## Patentansprüche

1. Verfahren zur In-Betrieb-Überwachung eines Digitalübertragungssystems ( SYS ) aus zwei Leitungsendgeräten ( LE1, LE2 ), die über wenigstens einen Zwischenregenerator ( ZWR1, ZWRn ) miteinander verbunden sind, bei dem Digitalsignale in einer vorgegebenen Rahmenstruktur bidirektional von Leitungsendgerät ( LE1,LE2 ) zu Leitungsendgerät ( LE2, LE1 ) übertragen werden und bei dem zusätzlich zu den Digitalsignalen Überwachungssignale ( U1 ) übertragen werden,
**dadurch gekennzeichnet,**
daß die Digitalsignale quasi-statische Informationen ( I1 ) enthalten, die in jedem Rahmen an einer vorgegebenen Stelle übertragen werden, und daß die Überwachungssignale ( U1 ) im Zeitmultiplexverfahren mit den quasi-statischen Informationen ( I1 ) an der gleichen Stelle im Rahmen übertragen werden.

2. Verfahren gemäß Anspruch 1, dadurch gekennzeichnet, daß in beiden Leitungsendgeräten ( LE1, LE2 ) in jedem zweiten zu übertragenden Rahmen, die im Rahmen enthaltenen quasi-statischen Informationen ( I2 ) durch Überwachungssignale ( U1 ) ersetzt werden, und daß in beiden Leitungsendgeräten ( LE1, LE2 ) in jedem zweiten empfangenen Rahmen, die im Rahmen enthaltenen Überwachungssignale ( U1 ) durch die quasi-statischen Informationen ( I1 ) des vorangehenden Rahmens ersetzt werden.

3. Verfahren gemäß Anspruch 2, dadurch gekennzeichnet, daß in jedem Zwischenregenerator (ZWR1, ZWRn ) die empfangenen Überwachungssignale ( U1 ) ausgewertet und daraufhin Daten über die Übertragungsgüte des vorangehenden Streckenabschnitts und über den aktuellen Betriebszustand des jeweiligen Zwischen regenerators ( ZWR1, ZWRn ) in Rückwärtsrichtung übertragen werden.

4. Verfahren gemäß Anspruch 3, dadurch gekennzeichnet, daß die Zwischen regeneratoren ( ZWR1 bis ZWRn ) von einem Leitungsendgerät ( LE1, LE2 ) gespeist werden, und daß für den Fall eines Kabelbruchs der Zwischenregenerator ( ZWR1, ZWRn ), der direkt vor dem in Speiserichtung gelegenen Kabel bruch liegt, in Gegenrichtung zur Speiserichtung durch Schalten einer Gleichstrom- und einer Signalschleife Überwachungssignale mit einer entsprechenden Alarmmeldung zum speisenden Leitungsendgerät ( LE1, LE2 ) überträgt.

5. Verfahren gemäß Anspruch 3, dadurch gekennzeichnet, daß während einer Initialisierungsphase jedem Zwischenregenerator (ZWR1, ZWRn ) von einem der zwei Leitungsendgeräte ( LE1, LE2 ) aus eine Adresse zugewiesen wird, und daß den Daten der zu übertragenden Übertragungssignale die Adresse des jeweiligen Zwischenregenerators (ZWR1, ZWRn ) hinzugefügt wird.

6. Verfahren gemäß einem der vorherigen Ansprüche, dadurch gekennzeichnet, daß die Zwischenregeneratoren (ZWR1, ZWRn ) von einem der zwei Leitungsendgeräte ( LE1, LE2 ) aus zeitkontinuierlich im Pollingverfahren abgefragt werden.
